# EUROPÄISCHE PATENTSCHRIFT

(11) **EP 0 483 877 B1**
(45) Veröffentlichungstag und Bekanntmachung des Hinweises auf die Patenterteilung: **24.07.1996**
(21) Anmeldenummer: 91118668.2
(22) Anmeldetag: 31.10.1991
(51) Int. Cl.: F23B 5/04, F23L 9/00, F23L 3/00, F23L 15/00, F23B 1/16

(54) **Brennvorrichtung für Holz und Kohle**
Combustion device for wood and coal
Dispositif de combustion pour bois et charbon

(30) Priorität: 31.10.1990 DE 4034671
(43) Veröffentlichungstag der Anmeldung: 06.05.1992
(73) Patentinhaber: Posch, Heribert, D-83627 Wall/Warngau (DE)
(72) Erfinder: Posch, Heribert, D-83627 Wall/Warngau (DE)
(74) Vertreter: Alber, Norbert

(56) Entgegenhaltungen:
- EP-A- 0 152 317
- DE-A- 4 007 849
- DE-C- 3 833 090

## Beschreibung

Die Erfindung betrifft eine Brennvorrichtung zum Verbrennen von Holz oder Kohle, bestehend aus einer Frontwand mit einer Brennstoff-Einfüllöffnung, aus zwei Seitenwänden, aus einer Rückwand, aus einer Bodenwand und aus einer Deckenwand, aus einer Tür für die Brennstoff-Einfüllöffnung, aus einem Steuerelement zur Steuerung des wirksamen Querschnitts einer Frischluft-Einlauföffnung, aus einer inneren Trennwand, die das Vorrichtungsinnere in eine Vorbrennkammer und eine Nachbrennkammer unterteilt und in der eine Durchtrittsöffnung zwischen den beiden Kammern vorgesehen ist, und aus einem Gitterrost am Boden der Vorbrennkammer sowie mit einem Rauchgasabzug, wobei die Trennwand an die Frontwand, die Seitenwände und die Rückwand abgedichtet anschließt und horizontal angeordnet ist und in die Durchtrittsöffnung der Trennwand abgedichtet ein von einem Ringraum, der mit der Frischluft-Einlauföffnung in Verbindung steht, umgebenes Schachtrohr eingesetzt ist, auf dessen oberem Ende der Gitterrost aufgelegt ist, wobei die Brennstoff- und die Frischluft-Einfüllöffnung und der Rauchgasabzug die einzigen Öffnungen der Vorrichtung sind und der Rauchgasabzug im Bereich der Nachbrennkammer in einer Seitenwand oder der Rückwand vorgesehen ist, wobei das Schachtrohr ausgehend von seiner im Bereich des Gitterrostes gelegenen Eintrittsöffnung im Querschnitt nach nunten verjüngt ist und der Ringraum zwischen der Außenseite des Schachtrohres und der Innenseite eines Ringraum-Außenmantelrohres ausgebildet ist.

Aus DE 38 33 090-C1 ist eine Brennvorrichtung der eingangs bezeichneten Gattung bekannt. Diese Vorrichtung macht von zwei Trennwänden Gebrauch, die im Bereich von Durchtrittsöffnungen über ein Schachtrohr miteinander in Verbindung stehen, innerhalb dessen ein verhältnismäßig kompliziert herzustellender Düsenkörper angeordnet ist. Diese bekannte Vorrichtung ist in ihrer Gesamtheit wegen der Herstellung insbesondere des Düsenkörpers aus hoch-hitzefestem Material und dessen konstruktiv aufwendiger Gestaltung sehr teuer, und zwar auch bei Massenherstellung, so daß wegen des hohen Gestehungspreises der bekannten Vorrichtung die grundsätzlich erreichbare umweltfreundliche Verbrennung nicht bzw. nur in geringem Umfang zur Anwendung kommt.

Dabei ist auch bei dieser Lösung ein sich streckenweise verjüngerndes Rohr als Düsenkörper vorhanden, das gleiche Rohr erweitert jedoch gleichzeitig seinen Querschnitt wieder, und zwar bevor es das untere Ende des umgebenden Außenmantel-Rohres erreicht, welches zusammen mit dem Düsenrohr selbst den umgebenden Ringraum für die Zuführung der Sekundärluft bildet. Zusätzlich ist dieses Außenmantel-Rohr zylindrisch gestaltet, und Vorbrennkammer und Nachbrennkammer sind durch zwei im Abstand horizontal verlaufende Trennplatten voneinander getrennt.

Der Erfindung liegt die Aufgabe zugrunde, die eingangs hinsichtlich ihrer Gattung bezeichnete Brennvorrichtung so weiterzubilden, daß es auch weiterhin keiner besonderen Erfahrung bei der Regelung des Brennverhaltens zur Steuerung der Heizleistung bedarf und zugleich der Brennwirkungsgrad und das Emissionsverhalten nach Möglichkeit noch weiter verbessert werden, dennoch aber die Neugestaltung eine preiswerte Herstellbarkeit gestatten soll.

Diese Aufgabe wird erfindungsgemäß dadurch gelöst, daß die unteren Enden des Schachtrohres und des Ringraum-Außenmantelrohres über ein zylindrisches oder prismatisches Rohr mit Luftdurchtrittsöffnungen verbunden sind, das Schachtrohr als auch das Ringraum-Außenmantelrohr als im wesentlichen nach unten verjüngte Rohre ausgebildet sind und die Querwand die einzige horizontale Trennwand zwischen Vorbrennkammer und Nachbrennkammer ist.

Durch die Konstruktion des einfachen, im Querschnitt nach unten verjüngten Schachtrohres ansetzend an der Durchtrittsöffnung der einzigen Trennwand und die Ausbildung eines Ringraums außenseitig des Schachtrohres und eines Ringraum-Außenmantelrohres läßt sich in Verbindung mit dem erfindungsgemäß vorgesehenen zylindrischen bzw. prismatischen Rohr, das die beiden unteren Enden des Schachtrohres und des Ringraum-Außenmantelrohres miteinander verbindet und Luftdurchtrittsöffnungen aufweist, eine einfache Konstruktion erreichen, die in der Praxis ohne bedeutsame Kosten realisierbar ist. Im übrigen gewährleistet diese Ausbildung eine Güte des Brennvorgangs, wie sie erstmals mittels der aus DE 38 33 090-C1 bekannten Vorrichtung bekannt ist. Das zylindrische bzw. prismatische Rohr, das die beiden anderen Rohre an ihrem unteren Enden miteinander verbindet, kann durchaus über die gegenseitige Verbindung hinaus nach unten verlängert sein. Das Innere des Schachtrohres und des zylindrischen bzw. prismatischen Rohres wird von dem Brenngasstrom der Vorbrennkammer durchströmt, wobei über die Luftdurchtrittsöffnungen im zylindrischen bzw. prismatischen Rohr Sekundärluft zugeführt wird, so daß das dadurch gebildete Gasgemisch in der Nachbrennkammer vollständig verbrennbar ist. Die durch die Luftdurchtrittsöffnung hindurchtretende Sekundärluft erfährt in dem Ringraum, der außenseitig von der Hitze der Nachbrennkammer beaufschlagt ist, eine so erhebliche Aufwärmung, daß bei ihrer Beimischung zu dem Brenngasstrom der Vorbrennkammer keine merkliche Temperatursenkung eintritt. Insbesondere erfährt die Sekundärluft eine Erwärmung auf über 500°C, weshalb die Brenngase beim Beimischen der Sekundärluft ihre Zündtemperatur nicht verlieren.

Selbstverständlich steht es dem Konstrukteur im Einzelfall frei, das Ringraum-Außenmantelrohr, das Schachtrohr und das prismatische Rohr im Querschnitt rechteckig auszubilden, da Öfen in der Regel eine entsprechende Rechteckgestalt besitzen. Dennoch kommt selbstverständlich auch ein runder Querschnitt der Einzelteile wie auch des Ofens selbst in Betracht, in welchem Fall die Frontwand, die Seitenwände und die Rückwand von entsprechend gelegenen Bereichen der dann in Draufsicht runden Umfangswand des Ofens gebildet sind.

Zur Verbesserung der Beimischung der Sekundärluft zu dem Brenngasstrom im Inneren des zylindrischen bzw. prismatischen Rohres sollte an dessen unteren freien Ende ein einwärts gerichteter Umlaufsteg vorgesehen sein. Diese bildet praktisch eine Staufläche für die Sekundärluft, nämlich gegen das ungemischte parallel Vorbeiströmen an den Brenngasen. Die Sekundärluft wird also durch den Umlaufsteg in Richtung auf das Zentrum der Brenngase umgelenkt und diesen intensiv beigemischt.

Für die Gestaltung des Schachtrohres mit seiner nach unten gerichteten Querschnittsverjüngung empfiehlt sich die Ausbildung des halben Scheitelwinkels im Größenbereich von 20 Grad bis 45 Grad, insbesondere von 25 Grad bis 35 Grad, während der halbe Scheitelwinkel des ebenfalls im Querschnitt nach unten verjüngten Ringraum-Außenmantelrohres im Größenbereich von 25 Grad bis 60 Grad liegen sollte. Durch die größere Ausbildung des Scheitelwinkels des Ringraum-Außenmantelrohres gegenüber dem Schachtrohr wird die Ablagerung von Feststoffpartikeln im Inneren des Ringraums hinter den Luftdurchtrittsöffnungen verhindert.

Wegen der hohen Temperaturen der Verbrennung in der Nachbrennkammer sollten das Schachtrohr, das Ringraum-Außenmantelrohr und das zylindrische bzw. prismatische Rohr aus hochhitzefestem Stahlblech hergestellt sein.

Neben der Schamotteauskleidung des Inneren des Ofens sollte eine solche Auskleidung auch an der Oberseite der das Ofeninnere in die Vorbrennkammer und die Nachbrennkammer unterteilenden Trennwand vorgesehen werden. Durch die in dieser Schamotteauskleidung gespeicherte Wärme läßt sich auch in der Endphase der Verbrennung einer Brennstoff-Füllung der Vorbrennkammer noch ausreichend Wärme zum Aufwärmen der Sekundärluft zur Verfügung stellen, so daß auch in dieser Phase eine einwandfreie Nachverbrennung gewährleistet ist.

Der Brennvorgang in seiner Gesamtheit läuft wie folgt ab. Der Brennstoff wird unter Einwirkung der Primärluft in der Vorbrennkammer vergast und teilweise verbrannt. Die Verbrennungsrückstände fallen durch den Gitterrost hindurch, gelangen anschließend in das Innere des Schachtrohres und fallen zum Boden der Nachbrennkammer herunter. Soweit diese Brennstoffreste, beispw. kleine Kohlepartikel oder dgl., noch weiter abbrennfähig sind, brennen sie in der Nachbrennkammer ab. Gleichzeitig treten die in der Vorbrennkammer anfallenden Brenngase und Abgase durch den Gitterrost hindurch, gelangen in das Innere des Schachtrohres und werden dort, wie bereits angegeben, mit der Sekundärluft vermischt. Zugleich findet unmittelbar nach der Beimischung eine Verbrennung gerichtet in die Nachbrennkammer statt.

Selbstverständlich können die in der Vorbrennkammer benötigte Luft (Primärluft) und die in der Nachbrennkammer benötigte Luft (Sekundärluft) über je eine eigene Frischluft-Einlauföffnung von außen zugeführt werden. Zu bevorzugen ist jedoch die Zuführung über eine gemeinsame Einlauföffnung.

Die Aufteilung der durch eine gemeinsame Frischluft-Einlauföffnung eintretenden Gesamtluft in Primärluft und Sekundärluft kann durch Anordnung der Öffnung in der Tür für die Brennstoff-Einfüllöffnung und entsprechende Gestaltung dieser Tür automatisch erfolgen. Für eine richtige Aufteilung bedarf es keines äußeren Eingriffs; maßgeblich ist die höhengerechte Anordnung der Frischluft-Einlauföffnung in der Tür und deren Gestaltung. Das dann an der Tür vorzusehende Steuerelement dient lediglich der Drosselung der Heizleistung durch Beeinflussung in erster Linie der Menge der Primärluft. Für die automatische Aufteilung der Frischluft sollte die Tür eine Kammer aufweisen, also eine auch als "Rucksacktür" zu bezeichnende Tür sein wobei aus dem oberen bzw. unteren Kammerteil je durch eine Öffnung die Primär- bzw. Sekundärluft austritt.

Durch die Vorsehung lediglich einer einzigen Frischluft-Einlauföffnung mit zugehörigem Steuerelement ist die Bedienbarkeit der erfindungsgemäßen Brennvorrichtung grundsätzlich so einfach wie überhaupt möglich; dies gilt unabhängig davon, ob die Frischluft-Einlauföffnung in der Tür oder anderweitig angeordnet ist.

Ausgiebige Brennversuche zur Bestimmung der optimalen Größenverhältnisse für bestimmte Heizleistungen und insbesondere zur Überprüfung des Emissionsverhaltens und Brennwirkungsgrades haben auch für die neu gestaltete erfindungsgemäße Brennvorrichtung gezeigt, daß der ungünstigste CO-Emissionswert, der während der Anheizphase auftritt, weit unter dem aufgrund gesetzlicher Vorschriften zulässigen durchschnittlichen CO-Maximalwert von 6.000 ppm CO für Öfen mit Festbrennstoffen liegt; die gemessenen ungünstigsten Maximalwerte liegen zwischen 2.000 und 3.000 ppm CO, während der Durchschnittswert bei nur 1.000 bis 1.200 ppm CO liegt. Diese Werte sind nicht nur besser als gesetzlich zulässig, sondern liegen sogar auch weit unter den bisher anderweitig erreichten Werten. Auch der erreichte Brenn-Wirkungsgrad mit knapp unter 90 % und gelegentlich sogar auch deutlich über 90 % ist weit besser als der aufgrund von Vorschriften zulässige Mindestwirkungsgrad von 75 %. Selbstverständlich kann für die Optimierung des Brennverhaltens während der Anheizphase eine übliche Anheizklappe vorgesehen sein, die nur während des Anheizens geöffnet wird. Da diese Klappe im übrigen geschlossen bleibt, stellen die Brennstoff-Einfüllöffnung mit ihrer integrierten Frischluft-Einlauföffnung und der Rauchgasabzug in der Tat die einzigen eigentlichen Öffnungen der Brennvorrichtung dar.

Für eine optimale Aufteilung der Frischluft in Primärluft und Sekundärluft mittels der "Rucksacktür" kann dadurch Sorge getragen werden, daß die Frischluft-Einlauföffnung im unteren Drittel der Höhe der Vorbrennkammer, vorzugsweise im Bereich der unteren 20 % der Höhe derselben, angeordnet ist. Eine solche Bemessung hat sich bei Brennversuchen als optimal erwiesen.

Aus dieser Sicht kommt alternativ auch die Verwendung einer Doppelkammertür in Betracht, deren eine Kammer mit der Vorbrennkammer und deren andere Kammer mit dem Luftschacht in Verbindung steht.

Für die problemlose Einstellung der Brennverhältnisse reicht die Ausbildung des Steuerelements als Klappe aus, die zwischen zwei Endstellungen verschwenkbar und nur in diesen arretierbar ist. Dabei ist in der einen Endstellung die Luft-Einlauföffnung vollständig geschlossen, während die andere Stellung die Betriebsstellung ist, die nicht verändert werden muß und optimale Brennverhältnisse gewährleistet. Somit ist durch die entsprechende Gestaltung des Steuerelements der Bediener der Notwendigkeit enthoben, etwa nach zwischenzeitlicher Beobachtung der Brennverhältnisse mehrfach nachsteuern zu müssen, um die jeweils richtige Beziehung zwischen den Mengen der Primärluft und der Sekundärluft zu finden.

Für ein gutes Emissionsverhalten ist im übrigen die Anordnung des Rauchgasabzuges innerhalb der Nachbrennkammer auch von Bedeutung; es empfiehlt sich diesbezüglich, daß der Rauchgasabzug höchstens in halber Höhe, vorzugsweise im unteren Drittel der Höhe, der Nachbrennkammer angeordnet ist.

Der Gitterrost sollte in Hinblick auf die Vermeidung von Feststoffablagerungen im Rostbereich aus runden Roststäben aufgebaut sein. Insbesondere sollte für die Verbrennung von Holz im Vergleich zur Verbrennung von Kohle ein etwa auf die Hälfte reduzierter freier Durchtrittsquerschnitt des Rostes vorgesehen sein, damit nicht mit Luftüberschuß gearbeitet werden muß. Hierfür kommt vorzugsweise ein abschnittsweiser Verschluß des Rostes in Betracht, wobei die verschlossenen Abschnitte zwischen zwei Roststäben gegenüber den verschlossenen Abschnitten zwischen benachbarten Roststäben versetzt angeordnet sein sollten. Dadurch laßt sich der an sich notwendige Abstand der Roststäbe unverändert beibehalten.

Im übrigen sollte selbstverständlich zur Entfernung der Asche aus der Nachbrennkammer in deren Bereich in der Frontwand eine abgedichtet verschließbare Öffnung vorgesehen werden.

Nachfolgend wird die Erfindung weiter ins einzelne gehend unter Bezugnahme auf die Zeichnung beschrieben; in dieser zeigen:

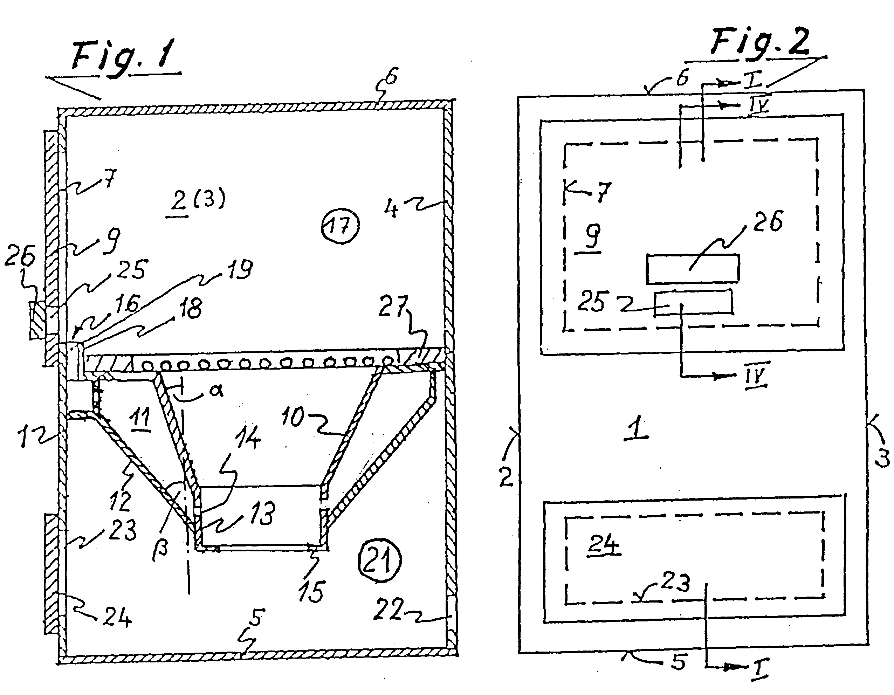

- Fig. 1: einen vertikalen Längsschnitt entlang der Tiefenrichtung durch eine ausschließlich beispielhaft zu verstehende Brennvorrichtung entlang der Linie I - I der Fig. 2,
- Fig. 2: eine Vorderansicht auf die Brennvorrichtung,
- Fig. 3: einen besonderen Gitterrost für Holz,
- Fig. 4: einen vertikalen Querschnitt durch die Tür der Brennvorrichtung entlang der Linie IV-IV der Fig. 2 und
- Fig. 5: einen schematischen Vertikal-Teilschnitt ähnlich der Darstellung der Fig.1, jedoch durch eine Brennvorrichtung mit mehreren Schachtrohren.

In Umfangsrichtung gesehen besteht die beim dargestellten Ausführungsbeispiel in Draufsicht rechteckige Brennvorrichtung aus einer Frontwand 1, zwei Seitenwänden 2, 3 und einer Rückwand 4 sowie aus einer Bodenwand 5 und einer Deckenwand 6. In der Frontwand 1 ist eine verhältnismäßig sehr große Öffnung 7 vorgesehen, die die Brennstoff-Einfüllöffnung darstellt.

Im Inneren der Vorrichtung ist eine Trennwand 8 vorgesehen, in der zentral eine Durchtrittsöffnung ausgebildet ist. In Hinblick auf die rechteckige Aufrißgestaltung der Vorrichtung in ihrer Gesamtheit ist die Durchtrittsöffnung im Aufriß rechteckig gestaltet, und zwar erstreckt sich bei dem dargestellten Ausführungsbeispiel die Rechteck-Langseite in Breitenrichtung der Vorrichtung, also zwischen den beiden Seitenwänden 2 und 3 derselben, während die Rechteck-Schmalseite parallel zur Zeichnungsebene verläuft.

In die Durchtrittsöffnung ist ein Schachtrohr 10 eingesetzt, das außenseitig von einem in sich geschlossenen Ringraum 11 umgeben ist. Das Schachtrohr 10 kann aber auch, statt in die Durchtrittsöffnung eingesetzt zu sein, an diese unmittelbar, d.h. abgedichtet anschließen.

Zur Ausbildung des Ringraums 11 außenseitig des Schachtrohres 10 dient ein Ringraum-Außenmantelrohr 12, das mit seinem oberen Ende an die Trennwand 8 angeschlossen ist und im unteren Bereich im wesentlichen als nach unten verjüngtes Rohr ausgebildet ist. Eine entsprechend nach unten gerichtete Verjüngung ist auch bei dem Schachtrohr 10 vorgesehen. Die unteren Enden des Schachtrohres 10 und des Ringraum-Außenmantelrohres 12 sind über ein prismatisches Rohr 13 miteinander verbunden, wobei in letzterem Luftdurchtrittsöffnungen 14 vorgesehen sind, über die Luft des Ringraums 11 in das Innere des prismatischen Rohres 13 eintreten kann.

Das untere freie Ende des prismatischen Rohres 13 weist einen einwärts gerichteten Umlaufsteg 15 auf, der die über die Luftdurchtrittsöffnungen 14 zugeführte Luft in Richtung auf das Zentrum der durch das prismatische Rohr 13 hindurchströmenden Brenngase richtet und somit zu einer guten Vermischung führt.

Die nach unten verjüngte Ausbildung des Ringraum-Außenmantelrohres 12 dient dazu, daß sich hinter den Luftdurchtrittsöffnungen 14 im Ringraum 11 keine Feststoffpartikel ansammeln und damit zu einer Verstopfung der Öffnungen 14 führen.

Dieser Ringraum 11 setzt sich wegen der beim dargestellten Ausführungsbeispiel höher als die Trennwand 8 gelegenen Frischluft-Einlauföffnung im Bereich der Frontwand 1 in der Form eines Luftschachtes 16 durch die Trennwand 8 hindurch über diese fort, also bis in die oberhalb der Trennwand 8 gelegene Vorbrennkammer 17. Zur Ausbildung des Luftschachtes 16 geht im genannten Bereich von der Oberseite der Trennwand 8 eine Schachtrückwand 18 aus, die seitlich über Schachtseitenwände 19 mit der Frontwand 1 in Verbindung steht. Der Luftschacht 16 ist nach oben offen und endet höchstens in etwa 20 % der Höhe der Vorbrennkammer 17 im Bereich der Brennstoff-Einfüllöffnung 7.

Läge die Frischluft-Einlauföffnung in der Höhe des Ringraums 11, so wäre der Luftschacht 16 entbehrlich, und könnte die Sekundärluft dem Ringraum 11 direkt zugeführt werden; allerdings müßte dann eine Zuführungsmöglichkeit für die Primärluft zur Vorbrennkammer 17 vorgesehen werden.

Die Frischluft-Einlauföffnung kann im übrigen selbstverständlich beliebig angeordnet sein, und zwar sowohl in Höhenrichtung als auch in Unfangsrichtung gesehen. Wichtig ist lediglich die Führung der Luft im Inneren der Brennvorrichtung, nämlich als Primärluft zur Vorbrennkammer und als Sekundärluft zur Nachbrennkammer. Im Bereich der Durchtrittsöffnung der Trennwand 8 und damit im Bereich des Eintrittsendes des Schachtrohres 10 ist ein Gitterrost 18 vorgesehen. Die Schlitze desselben sind so bemessen, daß im wesentlichen nur solche Brennstoffteile hindurch fallen können, die bei der Nachverbrennung vollständig oder nahezu vollständig verbrennen.

Der unterhalb der Trennwand 8 bzw. des Ringraum-Außenmantelrohres 12 gelegene Raum stellt eine Nachbrennkammer 21 dar. Von dem unteren Fünftel der Höhe derselben ausgehend führt ein Rauchgasabzug 22 durch die Rückwand 4 hindurch. An der Vorderseite der Nachbrennkammer 21 ist eine Öffnung 23 vorgesehen, die der Entnahme von Asche aus der Nachbrennkammer 21 dient. Diese Öffnung 23 ist durch eine Tür 24 abgedichtet verschlossen.

Die Brennstoff-Einfüllöffnung 7 stellt die Frontwand 1 betreffend auch zugleich die Frischluft-Einlauföffnung dar, die im Bereich einer zugehörigen Tür 9 eine im Querschnitt nur verhältnimäßig sehr kleine Einlauföffnung 25 ist. Dieser Öffnung 25 ist eine Klappe 26 zur Verschließung der Öffnung 25 zugeordnet. Die Frischluft-Einlauföffnung 25 ist entsprechend dem erfindungsgemäßen Konzept in etwa 20 % der Höhe der Vorbrennkammer 17 angeordnet, also im wesentlichen dort, wo das obere Ende des Luftschachtes 16 liegt. Die Klappe 26 ist zwischen einer Schließstellung und einer Öffnungsstellung, der eigentlichen Betriebsstellung verschwenkbar und nur in diesen arretierbar. Zwischenstellungen der Klappe 26 sind also nicht vorgesehen.

Anstelle des oberen bzw. unteren Teils der Öffnung 25 für die Primär- bzw. Sekundärluft kann selbstverständlich auch eine seitliche Aufteilung der Öffnung 25 vorgesehen sein, was allerdings eine Schiebergestaltung anders als dargestellt erforderlich macht.

Die durch den unteren Teil der Öffnung 25 eintretende Sekundärluft gelangt zunächst in den Luftschacht 16 und von diesem in den Ringraum 11. Letzterer ist durch das Verbrennen von Brennstoff in der Vorbrennkammer 17 gut mit Wärme versorgt, die durch die obere Trennwand 8 hindurchtritt. Um auch nach starker Reduzierung der Primärluftzuführung zur Vorbrennkammer 17 im Ringraum 11 die dort zugeführte Sekundärluft während einer gewissen Zeit noch verhältnismäßig gut erwärmen zu können, ist an der Oberseite der oberen Trennwand 8 eine Schamotteauskleidung 27 vorgesehen, die praktisch einen Langzeit-Wärmespeicher darstellt.

Die in den Ringraum 11 eintretende Sekundärluft wird dort sehr stark erhitzt, beispw. auf eine Temperatur von mehr als 500 °C. Aus dem Ringraum 11 gelangt die so sehr stark erhitzte Sekundärluft über die Durchtrittsöffnungen 14 in das Innere des Schachtrohres 10.

Die solchermaßen geführte Sekundärluft wird im Inneren des Rohres 13 mit den Abgasen und Brenngasen der Vorbrennkammer 17 vermischt, und zwar ohne daß es dabei zu einer merklichen Temperaturabsenkung kommt, jedenfalls zu keiner solchen unterhalb der Zündtemperatur der Brenngase. Für das Abbrennen der Brenngase steht daher die sehr stark erhitzte Sekundärluft zur Verfügung, so daß das Nachbrennen sehr wirkungsvoll ablaufen kann.

Das Vorbrennen des Brennstoffs in der Vorbrennkammer 17 findet unter der Mitwirkung der durch den oberen Teil der Frischluft-Einlauföffnung 25 eintretenden Primärluft statt. Dieses Vorbrennen stellt weitgehend auch ein Vergasen des Brennstoffs dar, wobei die Brenngase entstehen, die in der Nachbrennkammer 21 abgebrannt werden.

Selbstverständlich können alle Wände der Brennvorrichtung in herkömmlicher und üblicher Weise mit einer Schamotteauskleidung versehen sein. Lediglich das Schachtrohr 10, das Ringraum-Außenmantelrohr 12 und das zylindrische Rohr 13 sind unausgekleidete Teile, für deren Herstellung besonders hochhitzefestes Stahlblech zu verwenden ist.

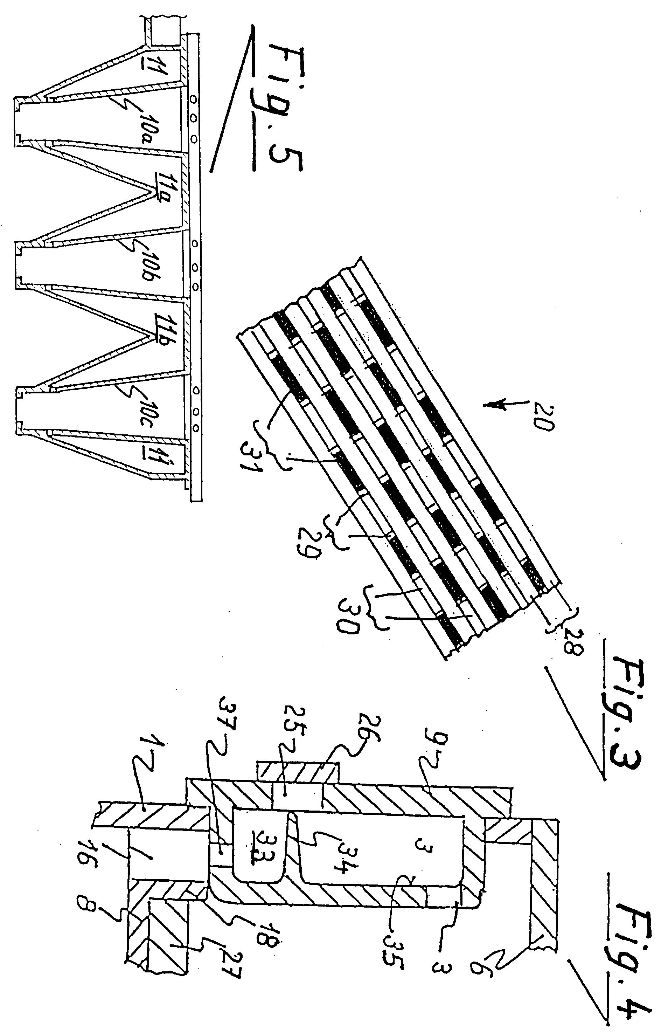

Der Gitterrost 20 besteht gemäß Fig. 3 aus Roststäben 28 runden Querschnitts, die über Abstandshalter 29 in einem Abstand von mindestens 6 mm und höchstens 12 mm miteinander verbunden sind und einen Durchmesser von mindestens 15 mm bis höchstens 30 mm aufweisen. Die runde Querschnittsgestalt der Roststäbe 28 dient zur Verhinderung der Bildung von Ablagerungen fester Partikel des durch den Gitterrost 20 hindurch streichenden Gasstroms. Die Anzahl der Roststäbe 28 hängt von der Größe der Durchtrittsöffnung in der Trennwand 8 ab.

Beim Verbrennen von Holz hat es sich zur Vermeidung eines Luftüberschusses als notwendig erwiesen, den freien Durchtrittsquerschnitt des Gitterrostes 20 kleiner zu halten als beim Verbrennen von Kohle; insbesondere kommt eine auf die Hälfte reduzierte Querschnittsfläche in Betracht. Da andererseits aber der Abstand der Roststäbe 28 nicht beliebig verkleinert werden darf, sofern die Brennverhältnisse nicht anderweitig beeinträchtigt werden sollen, ist zur Reduzierung der freien Durchtrittsfläche gemäß Fig. 3 vorgesehen, den an sich freien Querschnitt abschnittsweise zu verschließen, beispielsweise indem zwischen zwei einander benachbarten Roststäben 28 auf einen offenen Abschnitt 30 ein verschlossener Abschnitt 31 folgt. Für eine gleichmäßige Ausbildung der Brennverhältnisse empfiehlt sich in diesem Fall, die offenen bzw. verschlossenen Abschnitte 30 bzw. 31 aufeinander folgender Paare von Roststäben 28 gegeneinander zu versetzen.

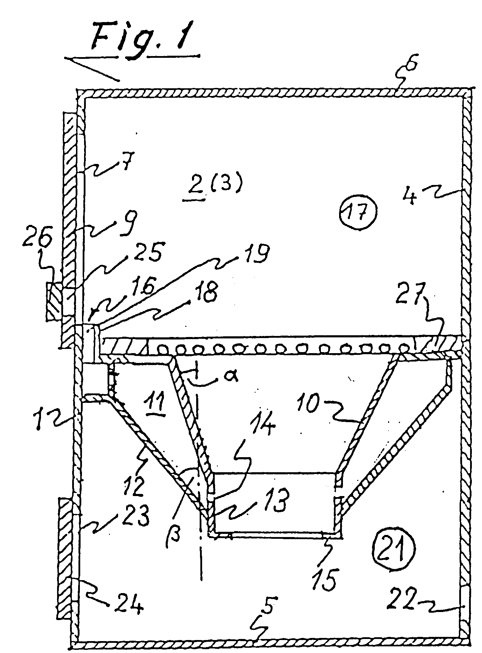

Die in Fig. 1 nur verhältnismäßig schematisch dargestellte Tür 9 kann als Doppelkammertür gemäß Fig. 4 ausgebildet sein. In dieser Tür sind zwei Kammern 32 und 33 mittels einer Trennwand 34 voneinander getrennt ausgebildet. Die Trennwand 34 geht von der inneren Rückwandfläche 35 der Tür 9 aus und erstreckt sich bis in den Bereich der Frischluft-Einlauföffnung 25 in der Vorderwand der Tür 9. Die beiden Kammern 32, 33 stehen über je eine Öffnung 36 bzw. 37 im rückwärtigen Türbereich bzw. im unteren Türbereich mit der Vorbrennkammer 17 bzw. über den Luftschacht 12 mit dem Ringraum 11 in Verbindung. Die Aufteilung der durch die Öffnung 25 eintretenden Luft in Primär- und Sekundärluft erfolgt mittels der Trennwand 34.

Die Tür 9 kann aber auch ohne Trennwand 34 ausgebildet sein, wobei dann die Primär- und die Sekundärluftaufteilung praktisch automatisch durch die Anordnung der Öffnungen 36 und 37 in entsprechender Höhe im rückwärtigen Bereich der als "Rucksacktür" zu bezeichnenden Tür gewährleistet ist.

Die erfindungsgemäße Brennvorrichtung kann ohne weiteres sowohl ein Einsatzofen sein, um den ein Ofensetzer unter Belassung der notwendigen Luftführungsräume den Kachelteil eines Kachelofens herumbaut, als auch ein Grundofen, gleichgültig ob fabrikmäßig ganz oder teilweise vorfabriziert oder von einem Ofensetzer an Ort und Stelle aus Einzelteilen errichtet, als auch ferner ein Heizkessel, in oder um den herum dann allerdings noch die notwendigen Wasser- bzw. Luftführungen mit zugehörigen Wärmetauschereinrichtungen einzubauen wären, die jedoch das erfindungsgemäße Konzept des eigentlichen Brennteils nicht tangieren und ihrerseits durch dieses auch nicht tangiert werden.

Anstelle der dargestellten und ausführlich beschriebenen Anordnung der Vorbrennkammer oberhalb der Nachbrennkammer können die beiden Brennkammern auch umgekehrt, d.h. die Nachbrennkammer oberhalb der Vorbrennkammer, oder in einer gemeinsamen Ebene angeordnet sein. In beiden Fällen bedarf es dann keines Rostes. Diese Varianten lassen ebenso gute Brennergebnisse zu, wobei die Variante mit der Nachbrennkammer oberhalb der Vorbrennkammer für den Bau offener Kamine geeignet ist.

Anstelle eines einzigen Schachtrohres 10, wie dies aus Fig. 1 ersichtlich ist, können mehrere solche Schachtrohre 10a, 10b, 10c nebeneinander liegend in der Durchtrittsöffnung der Trennwand 8 eingesetzt sein. In diesem Fall ist es zweckmäßig, alle Schachtrohre identisch auszubilden und zwischen jeweils zwei benachbarten Schachtrohren einen Kanalraum 11a, 11b vorzusehen, der einander gegenüberliegende Bereiche des Ringraums 11 miteinander verbindet. und damit praktisch, jedenfalls strömungstechnisch, Bestandteil des Ringraums 11 bildet. Diese Ausbildung gewährleistet nochmals verbesserte Brennverhältnisse, weil die quer zu den Stäben des Gitterrostes liegenden Wände der Schachtrohre in einem verhältnismäßig kleinen Abstand zueinander angeordnet sind, was die Flammen- und Gasführung begünstigt.

Selbstverständlich können die nebeneinander liegenden Schachtrohre 10a, 10b, 10c der Fig. 5 entgegen der dortigen Darstellung in der um 90° verdrehten Richtung nebeneinander liegen; in diesem Fall ergibt sich eine Darstellung gemäß Fig. 5, bei der lediglich die Stäbe des Gitterrostes statt quer zur Zeichnungsebene liegend parallel zur und in der Zeichnungsebene verlaufen.

## Patentansprüche

1. Brennvorrichtung zum Verbrennen von Holz oder Kohle, bestehend aus:
- einer Frontwand (1) mit einer Brennstoff-Einfüllöffnung (7),
- aus zwei Seitenwänden (2, 3),
- aus einer Rückwand (4),
- aus einer Bodenwand (5) und
- aus einer Deckenwand (6),
- aus einer Tür (9) für die Brennstoff-Einfüllöffnung (7),
- aus einem Steuerelement zur Steuerung des wirksamen Querschnitts einer Frischluft-Einlauföffnung (25),
- aus einer inneren Trennwand (8), die das Vorrichtungsinnere in eine Vorbrennkammer (17) und eine Nachbrennkammer (21) unterteilt und in der eine Durchtrittsöffnung zwischen den beiden Kammern vorgesehen ist,
- und aus einem Gitterrost (18) am Boden der Vorbrennkammer (17) sowie
- einem Rauchgasabzug (22),
- wobei die Trennwand (18) an die Frontwand (1), die Seitenwände (2, 3) und die Rückwand (4) abgedichtet anschließt und horizontal angeordnet ist,
- in die Durchtrittsöffnung der Trennwand (8) abgedichtet ein von einem Ringraum (11), der mit der Frischluft-Einlauföffnung (25) über einen Luftschacht (16) in Verbindung steht, umgebenes Schachtrohr (10) eingesetzt ist, auf dessem oberen Ende der Gitterrost (18) aufgelegt ist,
- wobei die Brennstoff-Einfüllöffnung und die Frischluft-Einfüllöffnung (25) und der Rauchgasabzug (22) die einzigen Öffnungen der Vorrichtung sind und der Rauchgasabzug (22) im Bereich der Nachbrennkammer (21) in einer Seitenwand oder der Rückwand vorgesehen ist,
- wobei das Schachtrohr (10) ausgehend von seiner im Bereich des Gitterrostes (18) gelegenen Eintrittsöffnung im Querschnitt nach unten verjüngt ist und
- der Ringraum (11) zwischen der Außenseite des Schachtrohres (10) und der Innenseite eines Ringraum-Außenmantelrohres (12) ausgebildet ist,
**dadurch gekennzeichnet, daß**
- die unteren Enden des Schachtrohres (10) und des Ringraum-Außenmantelrohres (12) über ein zylindrisches oder prismatisches Rohr (13) mit Luftdurchtrittsöffnungen (14) verbunden sind,
- das Schachtrohr (10) als auch das Ringraum-Außenmantelrohr (12) als im wesentlichen nach unten verjüngte Rohre ausgebildet sind, und
- die Querwand (8) die einzige horizontale Trennwand zwischen Vorbrennkammer (17) und Nachbrennkammer (21) ist.

2. Brennvorrichtung nach Anspruch 1,
**dadurch gekennzeichnet, daß**
der Scheitelwinkel (β) des Ringraum-Außenmantelrohres (12) größer ist als der Scheitelwinkel (α) des Schachtrohres (10).

3. Brennvorrichtung nach Anspruch 1 oder 2, **dadurch gekennzeichnet**, daß das Ringraum-Außenmantelrohr (12) im wesentlichen die Deckenwand der Nachbrennkammer bildet.

4. Brennvorrichtung nach Anspruch 1, **dadurch gekennzeichnet**, daß das Ringraum-Außenmantelrohr (12), das Schachtrohr (10) und das prismatische Rohr (13) im Querschnitt rechteckig ausgebildet sind.

5. Brennvorrichtung nach Anspruch 1, **dadurch gekennzeichnet**, 5 daß am unteren freien Ende des zylindrischen bzw. prismatischen Rohres (13) ein einwärts gerichteter Umlaufsteg (15) vorgesehen ist.

6. Brennvorrichtung nach Anspruch 1, **dadurch gekennzeichnet**, daß der halbe Scheitelwinkel (α) des nach unten im Querschnitt verjüngten Schachtrohres (10) kleiner als 45 Grad und größer als 20 Grad ist.

7. Brennvorrichtung nach Anspruch 6, **dadurch gekennzeichnet**, daß der halbe Scheitelwinkel (α) des Schachtrohres (10) im Bereich zwischen 25 und 35 Grad liegt.

8. Brennvorrichtung nach Anspruch 1, **dadurch gekennzeichnet**, daß der halbe Scheitelwinkel (β) des im Querschnitt nach unten verjüngten Ringraum-Außenmantelrohres (12) mindestens im Bereich des Anschlusses an das zylindrische Rohr (13) höchstens 60 Grad und mindestens 25 Grad mißt.

9. Brennvorrichtung nach mindestens einem der vorausgehenden Ansprüche, **dadurch gekennzeichnet**, daß das Schachtrohr (10), das Ringraum-Außenmantelrohr (12) und das zylindrische bzw. prismatische Rohr (13) aus hoch-hitzefestem Stahlblech bestehen.

10. Brennvorrichtung nach mindestens einem der vorausgehenden Ansprüche, **dadurch gekennzeichnet**, daß an der Oberseite der Trennwand (8) eine Schamotteauskleidung (27) vorgesehen ist.

11. Brennvorrichtung nach mindestens einem der vorausgehenden Ansprüche, **dadurch gekennzeichnet**, daß die Frischluft-Einlauföffnung (25) im unteren Drittel der Höhe der Vorbrennkammer (17), vorzugsweise im Bereich der unteren 20 % der Höhe derselben, angeordnet ist.

12. Brennvorrichtung nach Anspruch 11, **dadurch gekennzeichnet**, daß die Frischluft-Einlauföffnung (25) in der Tür (9) für die Brennstoff-Einfüllöffnung vorgesehen ist.

13. Brennvorrichtung nach mindestens einem der vorhergehenden Ansprüche, **dadurch gekennzeichnet**, daß die Tür für die Brennstoff-Einfüllöffnung zugleich die Frontwand der Vorrichtung bildet.

14. Brennvorrichtung nach mindestens einem der vorausgehenden Ansprüche, **dadurch gekennzeichnet,** daß das Regelelement (26) als Klappe ausgebildet ist, die zwischen zwei Endstellungen verschwenkbar und nur in diesen arretierbar ist, wobei in der einen Endstellung die Luft-Einlauföffnung (25) vollständig verschlossen ist.

15. Brennvorrichtung nach mindestens einem der vorausgehenden Ansprüche, **dadurch gekennzeichnet**, daß die Breite und die Tiefe der Vorbrennkammer (17) und/oder der Nachbrennkammer (21) etwa gleich groß bemessen sind.

16. Brennvorrichtung nach mindestens einem der vorausgehenden Ansprüche, **dadurch gekennzeichnet**, daß der Rauchgasabzug (22) höchstens in halber Höhe unterhalb des freien Endes des zylindrischen bzw. prismatischen Rohres (13) angeordnet ist.

17. Brennvorrichtung nach mindestens einem der vorausgehenden Ansprüche, **dadurch gekennzeichnet**, daß in der Frontwand (1) eine abgedichtet verschließbare Öffnung (23) als Zugang zur Nachbrennkammer (21) vorgesehen ist.

18. Brennvorrichtung nach mindestens einem der vorausgehenden Ansprüche, **dadurch gekennzeichnet**, daß die Tür (9) eine Kammer (32, 33) aufweist, deren unterer und oberer Teil über je eine Öffnung (36, 37) im rückwärtigen Bereich der Tür (9) mit der Vorbrennkammer (17) bzw. dem Luftschacht (16) in Verbindung stehen.

19. Brennvorrichtung nach mindestens einem der vorausgehenden Ansprüche, **dadurch gekennzeichnet**, daß die Frischluft-Einlauföffnung (25) höher als der Ringraum (11) angeordnet ist und letzterer sich in der Form eines Luftschachtes (16) im Bereich der Frontwand (1) über die Trennwand (8) hinaus fortsetzt, wobei dieser Luftschacht (16) mit der Frischluft-Einlauföffnung (25) in Verbindung steht.

20. Brennvorrichtung nach einem der vorhergehenden Ansprüche, dadurch gekennzeichnet, daß der Luftschacht (16) nach oben offen ist und höchstens in etwa 20% der Höhe der Vorbrennkammer (17) im Bereich der Brennstoff-Einfüllöffnung (7) endet.

21. Brennvorrichtung nach mindestens einem der vorausgehenden Ansprüche, **dadurch gekennzeichnet**, daß der Gitterrost (20) aus im Querschnitt runden Roststäben (28) besteht, die in einem Abstand von mindestens 6 mm und höchstens 12 mm voneinander angeordnet sind und einen Durchmesser von mindestens 15 mm bis höchstens 30 mm aufweisen.

22. Brennvorrichtung nach Anspruch 21 für das Verbrennen von Holz, **dadurch gekennzeichnet**, daß der an sich freie Durchtrittsquerschnitt zwischen den Roststäben (28) derart abschnittsweise verschlossen ist, daß nur noch die halbe Querschnittsfläche für den freien Durchtritt zur Verfügung steht, wobei die verschlossenen Abschnittsbereiche (31) zwischen zwei aufeinander folgenden Paaren von Roststäben (28) gegeneinander versetzt sind.

23. Brennvorrichtung nach mindestens einem der vorausgehenden Ansprüche, **dadurch gekennzeichnet**, daß in die Durchtrittsöffnung der Trennwand (8) mehrere gemeinsam von dem Ringraum (11) umgebene Schachtrohre (10a, 10b, 10c) nebeneinander liegend eingesetzt sind.

24. Brennvorrichtung nach Anspruch 23, **dadurch gekennzeichnet**, daß alle Schachtrohre (10a, 10b, 10c) identisch ausgebildet sind.

25. Brennvorrichtung nach Anspruch 23 oder 24, **dadurch gekennzeichnet**, daß zwischen jeweils zwei einander benachbarte Schachtrohre (10a, 10b; 10b, 10c) ein einander gegenüberliegende Bereiche des Ringraums (11) miteinander verbindender Kanalraum (11a, 11b) vorgesehen ist.

## Claims

1. Burning installation for the combustion of wood or coal, comprising:
- a front wall (1) with a fuel-introduction opening (7),
- two side walls (2, 3),
- a rear wall (4),
- a base wall (5) and
- a top wall (6),
- a door (9) for the fuel-introduction opening (7),
- a control element for controlling the effective cross-section of a fresh-air inlet opening (25),
- an inner partition wall (8) which subdivides the interior of the installation into a preburning chamber (17) and an afterburning chamber (21) and in which there is provided a through-passage opening between the two chambers,
- and a grating (20) on the base of the preburning chamber (17), as well as
- a flue-gas extractor (22),
- the partition wall (8) adjoining the front wall (1), the side walls (2, 3) and the rear wall (4) in a sealed manner and being arranged horizontally,
- a shaft pipe (10) being inserted into the through-passage opening of the partition wall (8) in a sealed manner, which pipe is enclosed by an annular space (11), in connection with the fresh-air inlet opening (25) via an air shaft (16), and has the grating (20) positioned on its upper end,
- the fuel-introduction opening and the fresh-air inlet opening (25) and the flue-gas extractor (22) being the only openings in the installation, and the flue-gas extractor (22) being provided, in the region of the afterburning chamber (21), in a side wall or the rear wall,
- starting from its inlet opening located in the region of the grating (20), the shaft pipe (10) tapering downwards in cross-section, and
- the annular space (11) being formed between the outside of the shaft pipe (10) and the inside of an annular-space outer-casing pipe (12),
characterized in that
- the bottom ends of the shaft pipe (10) and of the annular-space outer-casing pipe (12) are connected to air through-passage openings (14) via a cylindrical or prismatic pipe (13),
- the shaft pipe (10) as well as the annular-space outer-casing pipe (12) are designed as essentially downwardly tapering pipes, and
- the transverse wall (8) is the only horizontal partition wall between the preburning chamber (17) and afterburning chamber (21).

2. Burning installation according to Claim 1, characterized in that the apex angle (β) of the annular-space outer-casing pipe (12) is greater than the apex angle (α) of the shaft pipe (10).

3. Burning installation according to Claim 1 or 2, characterized in that the annular-space outer-casing pipe (12) essentially forms the top wall of the afterburning chamber.

4. Burning installation according to Claim 1, characterized in that the annular-chamber outer-casing pipe (12), the shaft pipe (10) and the prismatic pipe (13) are of rectangular design in cross-section.

5. Burning installation according to Claim 1, characterized in that an inwardly directed encircling web (15) is provided at the bottom, free end of the cylindrical or prismatic pipe (13).

6. Burning installation according to Claim 1, characterized in that half the apex angle (α) of the shaft pipe (10), which tapers downwards in cross-section, is less than 45 degrees and greater than 20 degrees.

7. Burning installation according to Claim 6, characterized in that half the apex angle (α) of the shaft pipe (10) is in the range between 25 and 35 degrees.

8. Burning installation according to Claim 1, characterized in that, at least in the region of the join with the cylindrical pipe (13), the measurement of half the apex angle (β) of the annular-space outer-casing pipe (12), which tapers downwards in cross-section, is not more than 60 degrees and at least 25 degrees.

9. Burning installation according to at least one of the preceding claims, characterized in that the shaft-pipe (10), the annular-space outer-casing pipe (12) and the cylindrical or prismatic pipe (13) consist of highly heat-resistant sheet steel.

10. Burning installation according to at least one of the preceding claims, characterized in that a chamotte lining (27) is provided on the upper side of the partition wall (8).

11. Burning installation according to at least one of the preceding claims, characterized in that the fresh-air inlet opening (25) is arranged in the bottom third of the height of the preburning chamber (17), preferably in the region of the bottom 20% of the height of the same.

12. Burning installation according to Claim 11, characterized in that the fresh-air inlet opening (25) is provided in the door (9) for the fuel-introduction opening.

13. Burning installation according to at least one of the preceding claims, characterized in that the door for the fuel-introduction opening simultaneously forms the front wall of the installation.

14. Burning installation according to at least one of the preceding claims, characterized in that the regulating element (26) is designed as damper which can be pivoted between two end positions and can be locked only in said end positions, the air inlet opening (25) being completely closed in one end position.

15. Burning installation according to at least one of the preceding claims, characterized in that the width and the depth of the preburning chamber (17) and/or the afterburning chamber (21) are of approximately the same dimensions.

16. Burning installation according to at least one of the preceding claims, characterized in that the flue-gas extractor (22) is arranged not more than halfway below the free end of the cylindrical or prismatic pipe (13).

17. Burning installation according to at least one of the preceding claims, characterized in that an opening (23) which can be closed in a sealed manner is provided, as access to the afterburning chamber (21), in the front wall (1).

18. Burning installation according to at least one of the preceding claims, characterized in that the door (9) has a chamber (32, 33) whose bottom and top parts are connected to the preburning chamber (17) and the air shaft (16), respectively, via in each case one opening (36, 37) in the rear region of the door (9).

19. Burning installation according to at least one of the preceding claims, characterized in that the fresh-air inlet opening (25) is arranged at a higher level than the annular space (11), and the latter continues beyond the partition wall (8), in the region of the front wall (1), in the form of an air shaft (16), the said air shaft (16) being connected to the fresh-air inlet opening (25).

20. Burning installation according to one of the preceding claims, characterized in that the air shaft (16) is open at the top and terminates not more than approximately 20% of the way up the preburning chamber (17) in the region of the fuel-introduction opening (7).

21. Burning installation according to at least one of the preceding claims, characterized in that the grating (20) comprises cross-sectionally round grating bars (28) which are arranged at a distance apart from one another of at least 6 mm and not more than 12 mm and have a diameter of from at least 15 mm to not more than 30 mm.

22. Burning installation according to Claim 21 for the combustion of wood, characterized in that some sections of the intrinsically free through-passage cross-section between the grating bars (28) are closed such that only half the cross-sectional area is available for free through-passage, the closed regions (31) between two successive pairs of grating bars (28) being offset with respect to one another.

23. Burning installation according to at least one of the preceding claims, characterized in that a plurality of shaft pipes (10a, 10b, 10c) jointly enclosed by the annular space (11) are inserted, such that they are located one beside the other, into the through-passage opening of the partition wall (8).

24. Burning installation according to Claim 23, characterized in that all the shaft pipes (l0a, l0b, l0c) are of identical design.

25. Burning installation according to Claim 23 or 24, characterized in that a duct space (11a, 11b) which connects mutually opposite regions of the annular space (11) to one another is provided between in each case two adjacent shaft pipes (10a, 10b; 10b, 10c).

## Revendications

1. Dispositif de combustion pour brûler du bois ou du charbon, comprenant :
- une paroi frontale (1) avec une ouverture de chargement de combustible (7),
- deux parois latérales (2, 3),
- une paroi arrière (4),
- une paroi de dessous (5) et
- une paroi de dessus (6),
- une porte (9) pour l'ouverture de chargement de combustible (7),
- un élément de commande pour commander la section utile d'une ouverture d'admission d'air frais (25),
- une cloison intérieure (8) qui subdivise l'intérieur du dispositif en une chambre de précombustion (17) et une chambre de postcombustion (21) et dans laquelle est prévue une ouverture de passage entre les deux chambres,
- et une grille (18) sur le fond de la chambre de précombustion (17), ainsi que
- une extraction (22) pour les gaz de fumées,
- la cloison (18) se raccordant de façon étanche à la paroi frontale (1), les parois latérales (2, 3) et la paroi arrière (4) et étant disposée horizontalement,
- un tube-entonnoir (10) entouré par un espace annulaire (11) qui communique par un puits d'air (16) avec l'ouverture d'admission d'air frais (25) étant rapporté de façon étanche dans l'ouverture de passage de la cloison (8), tube-entonnoir sur l'extrémité supérieure duquel est posée la grille (18),
- l'ouverture de chargement de combustible et l'ouverture d'admission d'air frais (25) et l'extraction (22) pour les gaz de fumées étant les seules ouvertures du dispositif et l'extraction (22) pour les gaz de fumées étant prévue dans la zone de la chambre de postcombustion (21) dans une paroi latérale ou la paroi arrière,
- le tube-entonnoir (10) diminuant de section vers le bas depuis son ouverture d'entrée située dans la zone de la grille (18), et
- l'espace annulaire (11) étant formé entre le côté extérieur du tube-entonnoir (10) et le côté intérieur d'un tube-enveloppe extérieur (12),
**caractérisé** par le fait que
- les extrémités inférieures du tube-entonnoir (10) et du tube-enveloppe extérieur (12) sont reliées par un tube cylindrique ou prismatique (13) à des ouvertures de passage d'air (14),
- le tube-entonnoir (10) ainsi que le tube-enveloppe extérieur (12) sont réalisés essentiellement sous la forme de tubes de section diminuant vers le bas, et
- la paroi transversale (8) est l'unique cloison horizontale de séparation entre la chambre de précombustion (17) et la chambre de postcombustion (21).

2. Dispositif de combustion suivant la revendication 1, **caractérisé** par le fait que l'angle au sommet (β) du tube-enveloppe extérieur (12) est plus grand que l'angle au sommet (α) du tube-entonnoir (10).

3. Dispositif de combustion suivant la revendication 1 ou 2, **caractérisé** par le fait que le tube-enveloppe extérieur (12) forme essentiellement la paroi de dessus de la chambre de postcombustion.

4. Dispositif de combustion suivant la revendication 1, **caractérisé** par le fait que le tube-enveloppe extérieur (12), le tube-entonnoir (10) et le tube prismatique (13) sont de section rectangulaire.

5. Dispositif de combustion suivant la revendication 1, **caractérisé** par le fait qu'un rebord périphérique intérieur (15) est prévu à l'extrémité libre inférieure du tube cylindrique ou prismatique (13).

6. Dispositif de combustion suivant la revendication 1, **caractérisé** par le fait que le demi-angle au sommet (α) du tube-entonnoir (10) diminuant de section vers le bas est inférieur à 45 degrés et supérieur à 20 degrés.

7. Dispositif de combustion suivant la revendication 6, **caractérisé** par le fait que le demi-angle au sommet (α) du tube-entonnoir (10) est compris entre 25 et 35 degrés.

8. Dispositif de combustion suivant la revendication 1, **caractérisé** par le fait que le demi-angle au sommet (β) du tube-enveloppe extérieur (12) diminuant de section vers le bas mesure, au moins dans la zone du raccordement au tube cylindrique (13), au plus 60 degrés et au moins 25 degrés.

9. Dispositif de combustion suivant au moins l'une des revendications précédentes, **caractérisé** par le fait que le tube-entonnoir (10), le tube-enveloppe extérieur (12) et le tube cylindrique ou prismatique (13) sont constitués de tôle d'acier résistant aux températures élevées.

10. Dispositif de combustion suivant au moins l'une des revendications précédentes, **caractérisé** par le fait qu'un garnissage de chamotte (27) est prévu sur le côté supérieur de la cloison (8).

11. Dispositif de combustion suivant au moins l'une des revendications précédentes, **caractérisé** par le fait que l'ouverture d'admission d'air frais (25) est disposée dans le tiers inférieur de la hauteur de la chambre de précombustion (17), de préférence dans la zone des 20 % inférieurs de la hauteur de cette chambre.

12. Dispositif de combustion suivant la revendication 11, **caractérisé** par le fait que l'ouverture d'admission d'air frais (25) est prévue dans la porte (9) pour l'ouverture de chargement de combustible.

13. Dispositif de combustion suivant au moins l'une des revendications précédentes, **caractérisé** par le fait que la porte pour l'ouverture de chargement de combustible forme simultanément la paroi frontale du dispositif.

14. Dispositif de combustion suivant au moins l'une des revendications précédentes, **caractérisé** par le fait que l'élément de réglage (26) est réalisé sous forme de volet qui peut pivoter entre deux positions extrêmes et ne peut être bloqué que dans ces dernières, l'ouverture d'admission d'air (25) étant complètement obturée dans une des positions extrêmes.

15. Dispositif de combustion suivant au moins l'une des revendications précédentes, **caractérisé** par le fait que la largeur et la profondeur de la chambre de précombustion (17) et/ou de la chambre de postcombustion (21) sont à peu près égales.

16. Dispositif de combustion suivant au moins l'une des revendications précédentes, **caractérisé** par le fait que l'extraction (22) pour les gaz de fumées est disposée tout au plus à mi-hauteur en dessous de l'extrémité libre du tube cylindrique ou prismatique (13).

17. Dispositif de combustion suivant au moins l'une des revendications précédentes, **caractérisé** par le fait qu'une ouverture (23) susceptible d'être obturée de façon étanche est prévue dans la paroi frontale (1) en tant qu'accès à la chambre de postcombustion (21).

18. Dispositif de combustion suivant au moins l'une des revendications précédentes, **caractérisé** par le fait que la porte (9) présente un compartiment (32, 33) dont la partie inférieure et la partie supérieure communiquent chacune par une ouverture (36, 37) dans la zone arrière de la porte (9) respectivement avec la chambre de précombustion (17) et avec le puits d'air (16).

19. Dispositif de combustion suivant au moins l'une des revendications précédentes, **caractérisé** par le fait que l'ouverture d'admission d'air frais (25) est disposée plus haut que l'espace annulaire (11) et que ce dernier se prolonge au-delà de la cloison (8) sous la forme d'un puits d'air (16) dans la zone de la paroi frontale (1), ce puits d'air (16) communiquant avec l'ouverture d'admission d'air frais (25).

20. Dispositif de combustion suivant l'une des revendications précédentes, **caractérisé** par le fait que le puits d'air (16) est ouvert vers le haut et se termine au plus à environ 20 % de la hauteur de la chambre de précombustion (17) dans la zone de l'ouverture de chargement de combustible (7).

21. Dispositif de combustion suivant au moins l'une des revendications précédentes, **caractérisé** par le fait que la grille (20) est constituée de barreaux (28) de section circulaire espacés au moins de 6 mm et au plus de 12 mm et présentant un diamètre d'au moins 15 mm et d'au plus 30 mm.

22. Dispositif de combustion suivant la revendication 21, pour brûler du bois, **caractérisé** par le fait que la section de passage libre entre les barreaux de grille (28) est obturée par zones de telle manière que seule la moitié de la section soit disponible pour le libre passage, les zones obturées (31) étant décalées réciproquement entre deux paires successives de barreaux de grille (28).

23. Dispositif de combustion suivant au moins l'une des revendications précédentes, **caractérisé** par le fait que plusieurs tubes-entonnoirs (10a, 10b, 10c) entourés en commun par l'espace annulaire (11) sont rapportés côte à côte dans l'ouverture de passage de la cloison (8).

24. Dispositif de combustion suivant la revendication 23, **caractérisé** par le fait que tous les tubes-entonnoirs (10a, 10b, 10c) sont réalisés de façon identique.

25. Dispositif de combustion suivant la revendication 23 ou 24, **caractérisé** par le fait qu'un espace-canal (11a, 11b) faisant communiquer entre elles les zones opposées de l'espace annulaire (11) est prévu entre chaque fois deux tubes-entonnoirs (10a, 10b ; 10b, 10c).
